# EUROPEAN PATENT APPLICATION

(11) **EP 2 991 053 A1**
(43) Date of publication of application: **02.03.2016**
(21) Application number: 14182402.9
(22) Date of filing: 27.08.2014
(51) Int. Cl.: G08B 27/00, H04M 1/725, H04W 4/22, H04M 11/04, H04B 1/3805

(54) **Add-on device for a mobile communication device and system and method for receiving an alarming signal**

(71) Applicant: ETAVIS Micatel AG, 3063 Ittigen (CH)
(72) Inventor: Salina, Jingming Li, 3005 Berne (CH); Bodenmüller, Sébastien, 3063 Ittigen (CH); Schär, Stefan, 3063 Ittigen (CH)
(74) Representative: Störzbach, Michael Andreas

(57) **Abstract**

The present invention relates to an add-on device (11) for a mobile communication device (12, 62) being adapted to transmit a communication signal to another communication device (12, 62) via a distinct signal line (18, 73, 74), and to a system (1, 61) and a method for receiving an alarming signal.

In order to allow a better accessibility for the transmission of an alarming signal transmission, the invention suggests that the add-on device (11) comprises a FM radio antenna (22) having a bandwidth including the frequency range of an alarming signal broadcast by a FM radio sender (5), and a FM radio receiver (27) adapted to receive the alarming signal from the FM radio antenna (22). The FM radio receiver (27) is adapted to forward the alarming signal to a user interface (14, 64) of the mobile communication device (12, 62) through a signal connection (15) with the mobile communication device (12,62).

## Description

The present invention relates to an add-on device for a mobile communication device being adapted to transmit a communication signal to another communication device via a distinct signal line, and to a system and a method for receiving an alarming signal.

In many countries a national warning system is provided for by which an alarming signal can be publicly broadcast, in particular in emergency cases. In such a warning system, the alarming signal typically comprises an audio signal and/or a radio data system (RDS) signal that is broadcast to the public by a FM sender. In Switzerland, for instance, FM-audio is used to broadcast emergency information as soon as an alert is launched in the air. After hearing the siren alert, the public audience is requested to switch on a FM radio receiver in order to receive the alarming message and a what-to-do instruction. Several RDS based alarming systems for public safety within the FM broadcasting band have also been developed and deployed in the USA and in other countries.

A broad reachability of the public in such a FM-Audio or FM-RDS or FM-RDS&Audio infrastructure presumes that everyone always has a FM radio nearby. Yet today the popularity of FM radio is rather decreasing and the availability of a FM radio in each public household is not ensured, i.e. not everybody has a FM radio nearby or even at home. For this reason, the traditional way for receiving an alarming signal appears to be getting out-dated, too.

On the other hand, mobile communication devices are widespread on the consumer market for professional and private usage. These devices include, for instance, mobile phones, smartphones, tablets, netbooks, and laptops. They have in common that a communication signal can be transmitted to another communication device via a distinct signal line. Such a distinct signal line can be established, for instance, via a cellular phone network, in particular within the GSM or UMTS or LTE frequency bands, or a wireless local area network (WLAN). As a result, specific communication partners can be selected by the user of such a mobile communication device and the privacy of the user can remain protected.

Yet under certain circumstances it would be desirable to reach a broad audience for the transmission of a signal, in particular in the above described cases related to an alarming event for the public. Beyond that, not only a broad reachability of the general public but also a reachability of a specific group of people that is only concerned with a respective alarming event would be beneficial in certain cases, without addressing the alarming signal to the whole public. For instance, in a professional working environment the distribution of an alarming signal to a specific insider group comprising a larger number of members is often required.

It is an object of the present invention to propose an add-on device and a system and method for receiving of an alarming signal for a mobile communication device that allows to remedy at least one of the above mentioned deficiencies. It is another object to provide such an add-on device and system and method with an increased accessibility and/or reliability and/or functionality and/or security.

At least one of these objects is achieved by the add-on device according to claim 1, the system for receiving an alarming signal according to claim 13, and the method for receiving an alarming signal according to claim 15. The dependent claims define preferred embodiments.

Thus, the invention suggests that the add-on device comprises a signal connection to the mobile communication device, a FM radio antenna having a bandwidth including the frequency range of an alarming signal broadcast by a FM radio sender, and a FM radio receiver adapted to receive the alarming signal from the FM radio antenna. The FM radio receiver is adapted to forward the alarming signal to a user interface of the mobile communication device through the signal connection.

It has been realized in the course of the present invention that the widespread usage of mobile communication devices can be exploited for an advantageous distribution of an alarming signal via FM radio transmission. Assuming the availability of an FM radio infrastructure and the capability of broadcasting an FM radio based alarming signal, the present invention particularly focuses on the mobile communication device for receiving such an alarming signal. Thus, the current invention is designed to modernize an FM based alarming system by utilizing a mobile communication device as the end-user device to receive the FM-radio alarming message. According to a further aspect, a redundancy of the signal transmission via the distinct signal line of the mobile communication device can provided by the FM broadcasting signal way, and vice versa, thus increasing the security of the signal transmission.

A system for receiving an alarming signal comprises at least one mobile communication device being adapted to transmit a communication signal to another communication device via a distinct signal line. The mobile communication device is equipped with a FM radio antenna having a bandwidth including the frequency range of an alarming signal broadcast by a FM radio sender, and with a FM radio receiver adapted to receive the alarming signal from the FM radio antenna. The FM radio receiver is adapted to forward the alarming signal to a user interface of the mobile communication device through the signal connection.

A corresponding method for receiving an alarming signal comprises the steps of
- broadcasting an alarming signal by a FM radio sender;
- receiving the alarming signal by a FM radio receiver that is connected to a mobile communication device; and
- transferring the alarming signal to a user interface of the mobile communication device.

The following preferred configurations of the invention may be advantageously implemented in at least one of the add-on device and/or the system and/or the method for receiving an alarming signal.

Preferably, the mobile communication device is a smartphone. A smartphone as the end-user device for receiving an alarming message may enable the broadest reachability. Furthermore, the tremendous communication and multimedia capability of a smartphone may enhance the alarming message reception for everyone in concern including handicapped, elderly, foreign visitors, etc. It is understood, that other mobile communication devices are conceivable, in particular mobile phones, tablets, netbooks, and laptops. The distinct signal line is preferably provided by a cellular phone network, in particular within the GSM or UMTS or LTE frequency bands, and/or a wireless local area network (WLAN). Preferably the user interface is provided by an application software, in particular an App, being installed on a hardware and/or firmware and/or software of the mobile communication device.

According to a preferred implementation, an encoded alarming signal is transmitted by the FM radio sender, in particular an encoded text. Preferably, the FM radio receiver is configured with logic to decode the alarming signal and to forward the decoded alarming signal to the user interface. This implementation may be applied under circumstances in which security of the transmitted alarming signal is required, in particular during personal or professional usage, when only selected people are intended or allowed to receive the alarming signal.

According to another preferred implementation, the alarming signal transmitted by the FM radio sender is not encoded. Preferably, the FM radio receiver is configured with logic to transfer the alarming signal to the user interface wherein no decoding is required. This implementation may be used under circumstances in which the broadest reachability is required, in particular for public usage.

According to a first preferred configuration, the alarming signal transmitted by the FM radio sender comprises a Radio Data System (RDS) signal and/or an audio signal. Such a signal is subsequently referred to as a FM-RDS&Audio signal. According to a second preferred configuration, the alarming signal transmitted by the FM radio sender is a Radio Data System (RDS) signal. Such a signal is subsequently referred to as a FM-RDS signal.

A transmission of a FM audio signal may be particularly advantageous in the case of public usage when a higher covering range of the transmitted alarming signal is desirable. In the case of a transmission of an FM audio signal, the method according to the invention preferably comprises a transformation of the FM audio signal received by the receiver from a sound signal in a text signal. An add-on device according to the invention is preferably configured to execute said transformation. Preferably, the transformation is executed by the FM radio receiver before transferring the alarming signal to the user interface of the mobile communication device. A transmission of a FM RDS signal may be particularly advantageous in a case in which an encoded alarming signal is required, in particular in professional applications.

Preferably, the FM radio receiver is configured with logic to tune to a predetermined signal channel corresponding to the frequency range of the alarming signal that is broadcast by the FM radio sender. More preferred, the FM radio receiver is configured with logic to perform said tuning continuously and/or after predetermined time intervals. Preferably, the alarming signal broadcast by the FM radio sender comprises a programme identification code (PI code) containing information about the predetermined signal channel. Preferably, the receiver is configured to receive the programme, in particular PI, and/or to identify the programme, in particular PI. In this way, the mobile communication device can be adapted to a reliable reception of the alarming signal even during continuing moving of the mobile communication device over various locations.

Preferably, the FM radio receiver, in particular a hardware and/or firmware and/or software of the FM radio receiver, is configured to be able to monitor a signaling which indicates the arrival of an alarming signal, in particular when the FM radio receiver is in a monitoring mode. Preferably, the arrival of an alarming signal is thus detected before the alarming signal is received by the receiver, in particular when the FM radio receiver is in a receiving mode. Preferably, the receiver is configured to switch from the monitoring mode to the receiving mode after the detection of an alarming signal. This may advantageously contribute to a low power consumption of the receiver.

Preferably, the FM receive antenna is connected to a low noise amplifier (LNA) enhancing the gain of FM receive antenna. Preferably, the FM receive antenna is connected to a dynamic impedance matching component optimizing the impedance of FM receive antenna. In this way, the reception sensitivity and thus the reliability for receiving the alarming signal can be further improved.

Preferably, the FM radio receiver is configured with logic to activate the mobile communication device after receiving of the alarming signal when the mobile communication device is not activated. In particular, the FM radio receiver is preferably configured to turn on the mobile communication device when it is turned off and/or to wake up the mobile communication device when it is in a stand by mode, in particular comprising a sleep mode, a SIM-locked mode, and a screen-locked mode. Thus, the mobile communication device can preferably be turned ready for operation by the impact of the FM radio receiver after receiving of the alarming signal. In this way, a reliable transfer of the alarming signal to the mobile communication device and thus to the user can be accomplished, even if the mobile communication device is turned off or in stand by mode.

Preferably, the user interface is adapted to process and read out an alarming message corresponding to the alarming signal. Thus, a high accessibility of the alarming message even for the end user can be ensured. Preferably, the alarming message corresponds to a character code, for instance an ASCII code, and/or voice data. According to a preferred configuration, the alarming message is translated into a different language, in particular into the language of the operation system of the mobile communication device, before it is read out by the user interface. Preferably, the alarming message is read out in a translated language and in addition in a original language in which the alarming signal has been broadcast. Thus, the security for signal delivery to the user can be further enhanced.

Preferably, the alarming message comprises a text message printed on a screen of the mobile communication device. Alternatively or additionally, the alarming message comprises a voice message emitted by a loudspeaker of the mobile communication device. Most preferred is a combined output of a text message and a voice message, in order to increase the security for signal delivery. Preferably, only text data or voice data is contained in the alarming signal received by the receiver, wherein the text data is converted into corresponding voice data or the voice data is converted into corresponding text data.

According to a preferred configuration, the text message is contained in a FM-RDS alarming signal and the voice message is generated by a text to speech converter by the user interface from the character code contained in the alarming signal. This configuration is in particular conceivable when an encoding of the alarming signal is required, such as in professional applications. According to another preferred configuration, the voice message is contained in a FM-Audio or FM-RDS&Audio alarming signal and the text message is generated by a speech to text converter by the user interface from the audio data contained in the alarming signal. This configuration is in particular conceivable when no encoding of the alarming signal is required, such as in public applications.

Preferably, the user interface is adapted to generate an alert after detecting the arrival of an alarming signal by the receiver and/or after receiving of the alarming signal by the receiver. This may ensure a high perceptibility of the alarming message directly after receiving of the alarming signal for the end user by attracting the end user's attention by the alert. Preferably, the alert comprises a signal tone and/or light emission and/or a vibration of the mobile communication device and/or any special type of alert suitable for disabled people, in particular for deaf and/or blind people. For instance, the alert may comprise a shaking bed for deaf people.

Preferably, the mobile communication device, in particular the user interface, is configured to transmit information to another communication device via a distinct signal line after receiving of the alarming signal. In particular, the mobile communication device is preferably configured to forward an alarming message based on the received alarming signal to another mobile communication device via the distinct signal line. In this way, the existing technology of the mobile communication device may be advantageously employed to enhance security related information or other information related to the end user. According to a preferred configuration, the transmission of said information can be activated by the end-user, in particular by operating of a push button on a screen of the mobile communication device.

In a preferred implementation, the system comprises at least one master mobile communication device equipped with the add-on device and at least one slave mobile communication device. The master mobile communication device is preferably configured to forward the alarming message based on the received alarming signal to the slave mobile communication device via the distinct signal line. In a corresponding method, the alarming signal received by the FM radio receiver is forwarded by the mobile communication device, in particular a master mobile communication device, to another mobile communication device, in particular a slave mobile communication device, via the distinct signal line.

Preferably, the user interface is configured to read out additional information related to the alarming message. Preferably, the information includes location information of the mobile communication device. For instance, the output of a GPS receiver or another location detector of the mobile communication device may be employed to gather this information. Alternatively or additionally, said information preferably includes establishing of a communication connection with another communication device. This may comprise initiating of a phone call and/or sending of a text message to the other communication device. This may allow to provide a fast communication connection for the end-user to other end-users and/or to an information center, in particular in emergency cases. Alternatively or additionally, said information preferably comprises accessing information for a web page. This may allow to provide enhanced information related to the alarming event to the end-user.

Preferably, the add-on device comprises a battery connected to the FM radio receiver. In this way, the power supply of the FM radio receiver can be independent from the power supply of the mobile communication device. Thus, the reliability for signal reception of the alarming signal can be further enhanced, even when the mobile communication device is off or out of power. For this purpose, a battery bag is preferably included in the add-on device. More preferred, a battery management circuit is comprised in the add-on device in order to optimize power consumption.

A memory is preferably implemented in the add-on device. Preferably, the memory is configured to store data related to a received alarming signal and/or to store data that is required for a further processing of a received alarming signal and/or to provide specific data related to a specific received alarming signal. In particular, the memory is preferably configured to store dictionaries required for a language translation of a received alarming signal and/or to store maps required for a determination of the momentary position of the mobile communication device. Preferably, the receiver is configured to write and/or read the data related to a received alarming signal in the memory and/or to process a received alarming signal and/or to provide specific data related to a specific received alarming signal, in particular based on the data stored in the memory, preferably in an off-line mode.

Preferably, the add-on device is attachable to and/or integratable into the mobile communication device and/or into an electronic device or equipment comprising a display and/or a loudspeaker and/or into any object that can be equipped which a display and/or loudspeaker. According to a preferred configuration, the add-on device comprises a housing attachable to or insertable into a housing of the mobile communication device. In this way, putting into operation of the add-on device on the mobile communication device can be simplified. According to a preferred configuration, the add-on device is insertable into a battery compartment of the mobile communication device. Preferably, the add-on device is connectable to the mobile communication device via the signal connection.

The invention is explained in more detail hereinafter by means of preferred embodiments with reference to the drawings which illustrate further properties and advantages of the invention. The figures, the description, and the claims comprise numerous features in combination that one skilled in the art may also contemplate separately and use in further appropriate combinations. In the drawings:
- Fig. 1: is a schematic representation of a system for receiving an alarming signal according to a first embodiment;
- Fig. 2: is a schematic representation of an add-on device for a mobile communication device in the system shown in Fig. 1;
- Fig. 3: is a schematic representation of an output screen of a mobile communication device in the system shown in Fig. 1;
- Fig. 4: is a schematic representation of another output screen of a mobile communication device in the system shown in Fig. 1;
- Fig. 5: is a schematic representation of a system for receiving an alarming signal according to a second embodiment;
- Fig. 6: is a schematic representation of an output screen of a master mobile communication device in the FMsystem shown in Fig. 5;
- Fig. 7: is a schematic representation of an output screen of a slave mobile communication device in the system shown in Fig. 5;
- Fig. 8: is a schematic representation of another output screen of a master mobile communication device in the system shown in Fig. 5; and
- Fig. 9: is a schematic representation of another output screen of a slave mobile communication device in the system shown in Fig. 5.

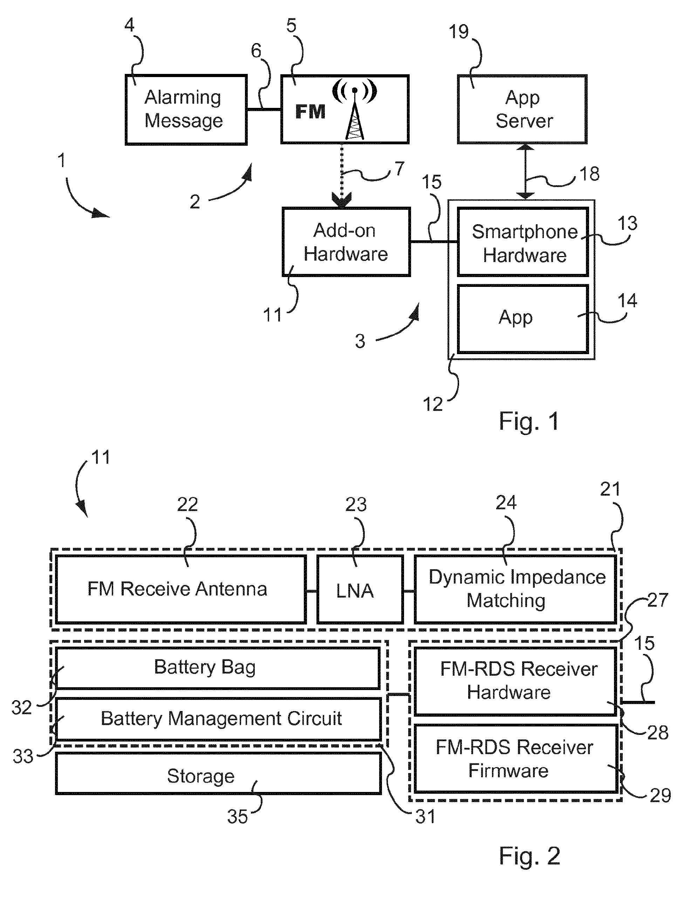

Fig. 1 depicts a system 1 for receiving an alarming signal in a mobile communication device 12. System 1 comprises an alarming signal broadcasting unit 2 with an alarming message signal generator 4 and at least one FM sender 5. Alarming message signal generator 4 is configured to provide an alarming message in the form of a radio data system (RDS) signal or an audio signal or a combination thereof. Via a signal line 6, the generated alarming signal is fed to FM sender 5 configured to send the alarming signal within the FM radio broadcast band. If the generated signal is a RDS signal, the corresponding broadcasted signal is subsequently referred to as a FM-RDS signal. If the generated signal is an audio signal or a combination of an audio signal and a RDS signal, the corresponding broadcasted signal is subsequently referred to as a FM-RDS&Audio signal.

System 1 further comprises a mobile alarming signal reception unit 3 including mobile communication device 12 equipped with an add-on device 11. The mobile communication device is a smartphone 12 including a conventional smartphone hardware 13 and installed firmware and/or software. Add-on device 11 is configured to receive the alarming signal broadcast by broadcasting unit 2 via a FM radio signal way 7.

Add-on device 11 is connected to smartphone hardware 13 via a signal connection 15. Signal connection 15 may be wired, in particular comprising a USB connector and/or an energy charging connector and/or any other connector port for a signal connection to smartphone 12, or wireless, in particular comprising a bluetooth and/or bluetooth low energy connection. A mobile alarming application software 14, subsequently referred to as alarming App or App, is installed on smartphone 12 and configured with logic to receive the alarming signal from add-on device 11 through signal connection 15. The alarming app running on hardware 13 and/or installed firmware and/or software constitutes a user interface 14 of smartphone 12 for the reception of the alarming signal. Alarming app 14 is further configured to be turned on by add-on device 11 after receipt of an alarming signal, in particular in a case in which smartphone 12 is turned off or in a sleep mode.

An app server 19 can be accessed by smartphone 12 via a distinct signal line 18, and vice versa, in particular after receipt of an alarming message by smartphone 12. Distinct signal line 18 may comprise, for instance, at least one of a WiFi connection, a mobile phone connection, an AirDrop connection, and a LTE device-to-device communication connection. App server 19 may host, for instance, a web-site containing additional information with respect to the alarming signal.

Thus, alarming system 1 is based on FM-RDS and/or FM-RDS&Audio signal broadcasting, wherein FM sender 5 sends an FM-RDS alarming message and/or an FM-RDS&Audio alarming message which is then received by add-on device 11.

According to a first embodiment, a FM-RDS alarming message is broadcast by alarming signal broadcasting unit 2. This embodiment is in particular conceivable for personal and/or professional applications. Add-on device 11 is adapted for receiving the FM-RDS alarming message from broadcasting unit 2 and to perform at least several or all of the subsequent actions:
a) add-on device 11 tunes automatically to the alarming message channel at start and while on-the-move;
b) add-on device 11 detects the arrival of a FM-RDS alarming message;
c-1)upon detection of a FM-RDS alarming message, add-on device 11 wakes up App 14 when smartphone 12 is turned on but in sleep mode or in SIM-locked mode or in screen-locked mode;
c-2)upon detection of a FM-RDS alarming message, add-on device 11 turns on smartphone 12 and wakes up App 14 when smartphone 12 is turned off;
d) add-on device 11 receives the FM-RDS alarming message;
e) add-on device 11 decodes the FM-RDS alarming message; and
f) add-on device 11 pushes the FM-RDS alarming message to smartphone 12.

App 14 is configured for receiving the FM-RDS alarming message from add-on device 11 and to perform at least several or all of the subsequent actions:
a) App 14 generates an alert, in particular in sirens, or in light, or in vibration, or in any combination of them, or in any special type of alert for disabled people;
b) App 14 displays the FM-RDS alarming message on a screen of smartphone 12 in the original text and in a translated text in a respective language of smartphone 12;
c) App 14 is configured to perform text to voice conversion, wherein it reads-out the RDS alarming message through a loudspeaker of smartphone 12 in the original text and in a translated text in a respective language of smartphone 12; and
d) App 14 adds enhanced option features like
   - after pressing a confirmation button by a user, momentary location information is sent;
   - after clicking at a link sent below the alarming message by a user, a call is initiated, or a SMS is sent, or a web-site is accessed for inquiring further information.

According to a second embodiment, a FM-RDS&Audio alarming message is broadcast by alarming signal broadcasting unit 2. This embodiment is in particular conceivable for public applications. Add-on device 11 is adapted for receiving the FM-RDS&Audio alarming message from broadcasting unit 2 and to perform at least several or all of the subsequent actions:
a) add-on device 11 tunes automatically to the alarming message channel at start and while on-the-move ;
b) add-on device 11 detects the arrival of a FM-RDS&Audio alarming message;
c-1)upon detection of a FM-RDS&Audio alarming message, add-on device 11 wakes up App 14 when smartphone 12 is in sleep mode or in SIM-locked mode or in screen-locked mode;
c-2)upon detection of a FM-RDS&Audio alarming message, add-on device 11 turns-on smartphone 12 and wakes up App 14 when smartphone 12 is turned off;
d) add-on device 11 receives the FM-Audio alarming message;
e) add-on device 11 pushes the Audio alarming message to smartphone 12;

App 14 is configured for receiving the FM-RDS&Audio alarming message from add-on device 11 and to perform at least several or all of the subsequent actions:
a) App 14 generates an alert, in particular in sirens, or in light, or in vibration, or in any combination of them, or in any special type of alert for disabled people;
b) App 14 broadcasts the FM-RDS&Audio alarming message with the loudspeaker of the smartphone in the original language and in a translated language corresponding to a respective language of smartphone 12;
c) App 14 is configured to perform voice to text conversion, wherein it displays the audio alarming message on a screen of smartphone 12 in the original language and in a translated language corresponding to a respective language of smartphone 12;
d) App 14 adds enhanced optional features like:
   - after pressing a confirmation button by a user, momentary location information is sent;
   - after pressing a help button by a user, a call-for-help is sent;
   - after clicking at a link sent below the alarming message by a user, a call is initiated, or a SMS is sent, or a web-site is accessed for inquiring further information.

Fig.2 displays a schematic view of add-on device 11 comprising an alarming signal receiving circuit 21, an alarming signal input circuit 27, a power supply circuit 31, and a storage 35. Storage 35 can be used to store an alarming message received by add-on device 11, to store dictionaries for an offline language translation, and to store maps for self-positioning.

Alarming signal receiving circuit 21 comprises a FM receive antenna 22, a low noise amplifier (LNA) 23 and a dynamic impedance matching component 24. LNA 23 enhances the gain of FM receive antenna 22 and dynamic impedance matching component 24 constantly optimizes the impedance of FM receive antenna 22 over the FM band. In this way, the reception sensitivity of FM receiver 11 is optimized for receiving the FM alarming signal broadcast by alarming signal broadcasting unit 2.

Alarming signal input circuit 27 comprises a receiver hardware (HW) 28 and a receiver firmware (FW) 29. Input circuit 27 is configured to detect the arrival of an alarming signal in receiving circuit 21. In such an event, input circuit 27 is configured to turn smartphone 12 on if it is turned off and to wake up App 14. Moreover, input circuit 27 is configured to provide the alarming signal to App 14 via signal connection 15. In this way, smartphone 12 is adapted to receive and output an alarming signal by alarming App 14 installed thereon even when it is turned off or in sleep mode. This also enhances the security precautions for an alarming signal reception in smartphone 12.

Power supply circuit 31 comprises a battery enclosed in a battery bag 32 and a battery management circuit 33. In this way, an independent power supply of add-on device 11 with respect to the power consumption of smartphone 12 can be provided. Alternatively, power supply circuit 31 may also be exploited for a power supply of smartphone 12 via signal connection 15. Battery management circuit 33 contributes to a saving of the power consumption of add-on device 11. This further enhances the security precautions for an alarming signal reception in smartphone 12.

Add-on device 11 is adapted to be integrated into a battery case of smartphone 12. It can also be integrated into another terminal device or equipment comprising a display and/or loudspeaker and/or any object to which a display and/or loudspeaker can be implemented, in particular a walking stick, a wheel chair, vehicle, etc. Add-on device 11 can also be adapted to access an external antenna, in particular when there is a dedicated place for it at a terminal device or equipment to which it is electrically connected.

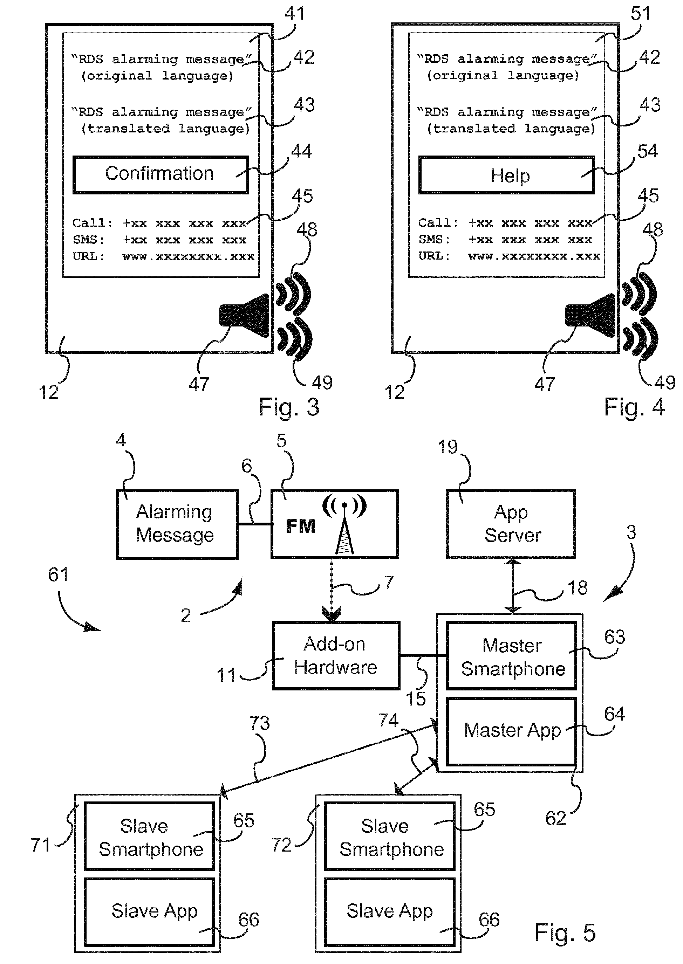

Fig. 3 depicts an output screen 41 of smartphone 12 when alarming App 14 is running, according to a first embodiment in which a FM-RDS alarming message is received by add-on device 11. This embodiment is in particular conceivable for personal and/or professional applications.

Output screen 41 is generated by alarming App 14 running on smartphone 12 and displays an alarming message 42 in a language corresponding to the FM-RDS signal in the language in which the FM-RDS signal has been received. Output screen 41 further displays an alarming message 43 corresponding to the received FM-RDS signal in a translated language. Output screen 41 also displays a confirmation button 44 to be pushed by a user in order to confirm receipt of the message. Moreover, supplementary information 45 is printed on output screen 41, in particular a link to a phone number and/or SMS number of a person or information center to be contacted, and/or a webpage address (URL) for additional information.

Fig. 3 also depicts a loudspeaker 47 of smartphone 12. A first voice signal 48 is generated by App 14 corresponding to the FM-RDS signal in the language in which the FM-RDS signal has been received. A second voice signal 49 is generated by App 14 corresponding to the received FM-RDS signal in a translated language.

According to a preferred configuration, App 14 running on smartphone 12
a) generates an alert in sirens, or in light, or in vibration, or in any combination of them;
b) displays the FM-RDS alarming message 42, 43 in the original language, and in the translated language of the smartphone;
c) reads-out the FM-RDS alarming message 48, 49 in the original language, and in the translated language of the smartphone;
d) saves the message together with the received date/time location and the signal strength;
e) discards the redundant message received later than pressing the confirmation button;
f) sends the location to a server at pressing the confirmation button in case of the availability of location info (e.g. GPS for outdoor location, iBeacons like indoor positioning system for indoor location) and of the backward communication link (e.g. Bluetooth, WiFi, mobile GSM, UMTS, LTE, etc.); and
   g)inquires further information by clicking at the links sent with the alarming message e.g.:
   - initiate a call
   - send a SMS
   - access a website
in case of the availability of the backward communication link (e.g. Bluetooth, WiFi, mobile GSM, UMTS, LTE, etc.).

Fig. 4 depicts an output screen 51 of smartphone 12 when alarming App 14 is running, according to a second embodiment in which a FM-RDS&Audio alarming message is received by add-on device 11. This embodiment is in particular conceivable for public applications. Output screen 51 is generated by alarming App 14 running on smartphone 12 and constituting a user interface. Corresponding features with respect to screen 41 shown in Fig. 3 are denoted with the same reference numerals. Output screen 51 displays a help button 54 to be pushed by a user in case that help is needed.

According to a preferred configuration, App 14 running on smartphone 12
a) generates an alert in sirens, or in light, or in vibration, or in any combination of them, or in any special type of alert for disabled people;
b) broadcasts the FM-RDS&Audio alarming message in the original language, and in the translated language of the smartphone;
c) displays the FM-RDS&Audio alarming message in the original language, and in the translated language of the smartphone;
d) saves the message together with the received date/time/location and the signal strength, and sends the location to a server by pressing the help button;
e) discards a redundant message received later than pressing the help button; and
f) inquires further information by clicking at the links sent with the alarming message e.g.:
   - initiate a call
   - send a SMS
   - access a website

in case of the availability of the backward communication link (e.g. Bluetooth, WiFi, mobile GSM, UMTS, LTE, etc.).

A method for receiving a FM-RDS alarming signal according to a first embodiment, in particular for professional or private usage, is subsequently described:
In an initiation procedure, a user
   a) adds add-on device 11 to smartphone 12;
   b) preferably types an access code into smartphone 12; and
   c) preferably configures App 14 with an activation date/ time/ duration. Thus, the subsequent steps are preferably carried out to receive a FM-RDS alarming message with a security protection. App 14 is then activated, preferably running in a sleep mode. Add-on device 11
   a) tunes to the RDS alarming message channel, in particular at start and while on-the-move; and
   b) monitors the arrival of "RDS Alarming Message".
In an alarming signal detection procedure, add-on device 11
   a) detects a RDS alarming message;
   b-1) wakes up App 14 when smartphone 12 is on but in sleep-mode or in SIM-locked mode or in screen-locked mode; or
   b-2) turns-on smartphone 12 and wakes up App 14 when smartphone 12 is off;
   c) receives the RDS alarming message;
   d) decodes the RDS alarming message;
   e) pushes the RDS alarming message to App 14 in smartphone 12.
In an alarming signal output procedure, App 14
   a) generates an alert;
   b) displays the RDS alarming message in the original language;
   c) translates the RDS alarming message into a smartphone language;
   d) displays the RDS alarming message in the smartphone language;
   e) activates text to voice conversion;
   f) reads-out the RDS alarming message in the original language; and
   g) reads-out the RDS alarming message in the smartphone language.
In an alarming signal confirmation procedure, the user presses confirmation button 44 and App 14
   a) saves the RDS alarming message with the message received date/time/location and the signal strength;
   b) displays the user location at an adequate map;
   c) sends the location info to the App server;
   d) discards the later received message with the same content.

Supplementary information 45 may also be contained in the FM-RDS signal. After receipt of the alarming message, the user may click at link 45 of a call number and App 14 initiates a call to inquire further information about the alarm and/or the user clicks at link 45 of a SMS Number and App 14 sends a SMS to inquire further information about the alarm and/or the user may click at link 45 of an URL and App 14 accesses the web-site to get further info about the alarm.

A method for receiving a FM-RDS&Audio alarming signal according to a second embodiment, in particular for public usage, is subsequently described:
In an initiation procedure, a user adds add-on device 11 to smartphone 12. App 14 is then activated, preferably running in a sleep mode. Add-on device 11
   a) tunes to the RDS&Audio alarming message channel, in particular at start & while on-the-move; and
   b) monitors the arrival of a RDS alarming message.
In an alarming signal detection procedure, add-on device 11
   a) detects a RDS&Audio alarming message;
   b-1) wakes up App 14 when smartphone 12 is on but in sleep-mode or in SIM-locked mode or in screen-locked mode;
   b-2) turns on smartphone 12 and wakes up App 14 when smartphone 12 is off;
   c) receives the audio alarming message; and
   d) pushes the audio alarming message to App 14 of smartphone 12.
In an alarming signal output procedure, App 14
   a) generates an alert;
   b) broadcasts the audio alarming message in the original language;
   c) translates the audio alarming message to a smartphone language;
   d) broadcasts the audio alarming message in the smartphone language;
   e) activates voice to text conversion;
   f) displays the audio alarming message in the original language; and
   g) displays the audio alarming message in the smartphone language.
In an alarming signal confirmation procedure, the user presses help button 54 and App 14
   a) saves the audio alarming message with the message received date/time/location and the signal strength;
   b) sends the call-for-help with location info to the App server; and
   c) discards a later received message with the same content.

If the FM-RDS&Audio signal does not only contain an audio signal but also an RDS signal, supplementary information 45 may also be sent via the RDS signal. After receipt of the alarming message, the user may click at link 45 of a call number and App 14 initiates a call to inquire further information about the alarm and/or the user clicks at link 45 of a SMS Number and App 14 sends a SMS to inquire further information about the alarm and/or the user may click at link 45 of an URL and App 14 accesses the web-site to get further info about the alarm.

Fig. 5 shows a system 61 for receiving an alarming signal in a mobile communication device 62, 71, 72 according to a second embodiment. Corresponding features with respect to system 1 shown in Fig. 1 are denoted with the same reference numerals.

System 61 comprises a master smartphone 62 with a conventional smartphone hardware 63 and firmware and/or software. A master App 64 is installed on master smartphone 62 constituting a user interface for a master user. Master smartphone 62 is equipped with add-on hardware 11 as described above. System 61 further comprises a number of slave smartphones 71, 72 with a conventional smartphone hardware 63 and firmware and/or software. A slave App 66 is installed on each slave smartphone 71, 72 constituting a user interface for a respective slave user. In this way, only master smartphone 62 is equipped to receive a FM-alarming signal from alarming signal broadcasting unit 2. Master smartphone 62 and slave smartphones 71, 72 are configured by means of master App 64 and slave App 66 such that the FM-alarming signal can be forwarded from master smartphone 62 to slave smartphones 71, 72 via a respective distinct signal line 73, 74, for instance via a WiFi and/or mobile phone connection and/or via AirDrop and/or LTE device-to-device communication. Distinct signal lines 73, 74 can also be used by slave smartphones 71, 72 in order to establish a communication connection to master smartphone 62, in particular to initiate a phone call from a slave user to the master user after receipt of an alarming message.

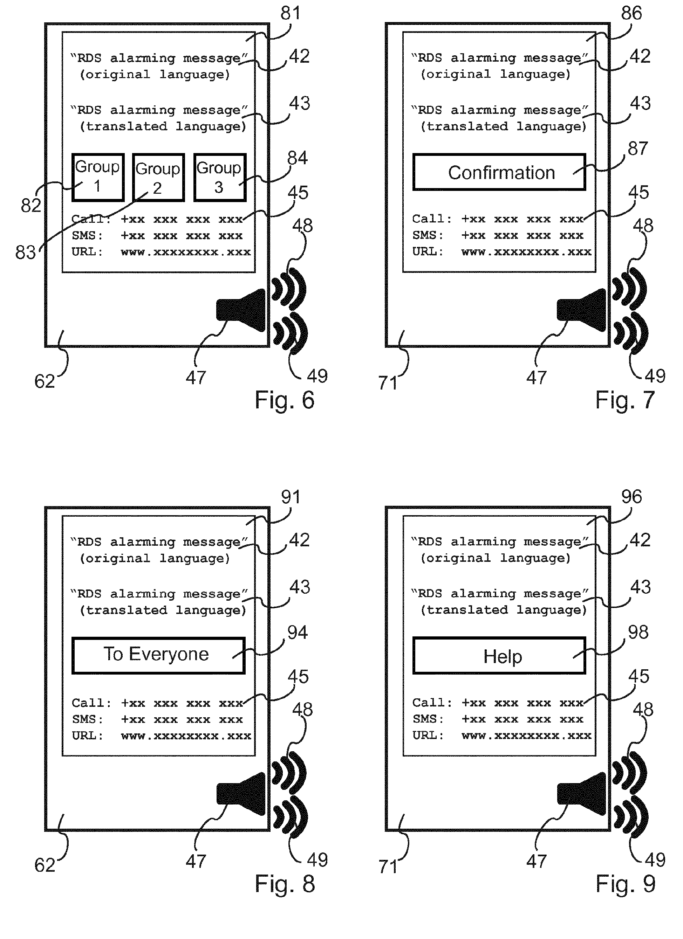

Fig. 6 depicts an output screen 81 of master smartphone 62 when master App 64 is running, according to a first embodiment in which a FM-RDS alarming message is received by add-on device 11. This embodiment is in particular conceivable for professional or private applications. Output screen 81 is generated by master App 64 constituting a user interface. Corresponding features with respect to screen 41 shown in Fig. 3 are denoted with the same reference numerals. Different from Fig. 3, the master App user interface has one or more forwarding buttons 82, 83, 84 to forward the received alarming message. Each forwarding button 82, 83, 84 is associated with a group of people. By clicking at a respective forwarding button 82, 83, 84, the received alarming message is forwarded to the targeted slave devices 71, 72.

Fig.7 depicts the corresponding output screen 81 of slave smartphone 71, 72 when slave App 66, 67 is running, according to the first embodiment. Different from the master App user interface 81 shown in Fig.6, by pressing at a confirmation button 87, the location of slave device 71, 72 is sent to master device 62.

Fig. 8 depicts an output screen 91 of master smartphone 62 when master App 64 is running, according to a second embodiment in which a FM-RDS&Audio alarming message is received by add-on device 11. This embodiment is in particular conceivable for public applications. Output screen 81 is generated by master App 64 constituting a user interface. Corresponding features with respect to screen 41 shown in Fig. 3 are denoted with the same reference numerals. Different from Fig. 3, the master App user interface has a single forwarding button 94 to forward the received alarming message to every slave device 71, 72.

Fig. 9 depicts the corresponding output screen 81 of slave smartphone 71, 72 when slave App 66, 67 is running, according to the first embodiment. Different from the master App user interface 81 shown in Fig.8, by pressing at a help button 98, the location of respective slave device 71, 72 is sent to master device 62.

A method for receiving a FM-RDS alarming signal in alarming signal receiving system 61 shown in Fig. 5 according to a first embodiment, in particular for professional or private usage, is subsequently described:

The method comprises an initiation procedure, an alarming signal detection procedure, and an alarming signal output procedure on master device 62 corresponding to the initiation procedure, alarming signal detection procedure, and alarming signal output procedure described above in the context of alarming signal receiving system 1 shown in Fig. 1.

After conducting the alarming signal output procedure on master device 62, a user of master device 62 may click a forwarding button 82, 83, 84 to forward the received alarming message to a specific group of people selected from all people with slave smartphones 71, 72. Master App 64 forwards the RDS alarming message to slave smartphones 71, 72 of the specific group via distinct signal lines 73, 74, for instance via AirDrop and/or LTE device-to-device communication. The above described alarming signal output procedure is then correspondingly applied on the respective slave smartphones 71, 72. Moreover, the above described alarming signal confirmation procedure described above in the context of alarming signal receiving system 1 shown in Fig. 1 is correspondingly applied on the respective slave device 71, 72 when the user presses confirmation button 87 on output screen 86.

In a slave device information collection procedure, master App 64
a) receives the locations of slave smartphones 71, 72; and
b) indicates the locations of each respective slave smartphone 71, 72 on a map. The user of master device 62 then may organize the necessary actions to be undertaken and may give further instructions to the respective users of slave smartphones 71, 72.

A method for receiving a FM-RDS&Audio alarming signal in alarming signal receiving system 61 shown in Fig. 5 according to a second embodiment, in particular for public usage, is subsequently described:
The method comprises an initiation procedure, an alarming signal detection procedure, and an alarming signal output procedure on master device 62 corresponding to the initiation procedure, alarming signal detection procedure, and alarming signal output procedure described above in the context of alarming signal receiving system 1 shown in Fig. 1.

After conducting the alarming signal output procedure on master device 62, a user of master device 62 may click a forwarding button 94 to forward the received alarming message to all people with slave smartphones 71, 72. Master App 64 forwards the RDS alarming message to slave smartphones 71, 72 of everyone in the reach via distinct signal lines 73, 74, for instance via AirDrop or another wireless information forwarding mechanism from one person to a number of persons. The above described alarming signal output procedure is then correspondingly applied on all slave smartphones 71, 72. Moreover, the above described alarming signal confirmation procedure described above in the context of alarming signal receiving system 1 is correspondingly applied on all slave device 71, 72 when the user presses help button 98 on output screen 96.

In a slave device information collection procedure, master App 64
a) receives the locations of slave smartphones 71, 72; and
b) indicates the locations of each respective slave smartphone 71, 72 on a map. The user of master device 62 then may organize the necessary actions to be undertaken and may give further instructions to the respective users of slave smartphones 71, 72.

Accordingly, the above described add-on device 11 and system 1, 61 as illustrated in Figs. 1 and 5 is designed to modernize the FM-RDS/FM-RDS&Audio emergency Alarming system for professional and for public. A corresponding method for receiving an alarming signal utilizes:
- the smartphone to receive the Alarming message (also in switched-off, sleep, SIM-locked, or screen-locked status) for its broadest reachability and tremendous communication and multimedia capability which ensures the Alarming message reception for everyone in concern including handicapped, elderly, foreign visitors, etc.; and
- the existing FM-RDS/FM-RDS&Audio infrastructure to send the Alarming message for its proven reliability secured by its power backup, its redundant transmitter, its immunity to cyber attack and network congestion, and its ubiquitous availability across the world.

The method is composed of:
- an FM-RDS/FM-RDS&Audio system for sending the Alarming message
- a smartphone
- an add-on device connected electrically (wired or wireless) to a smartphone for receiving the Alarming message and for switching-on the smartphone when it is off
- App running at the smartphone for alerting the user, and displaying/broadcasting the Alarming message.

Assuming the availability of FM-RDS/FM-RDS&Audio infrastructure and the capability of broadcasting FM-RDS/FM-RDS&Audio based Alarming message, the solution thus focuses on the add-on device and the App for receiving Alarming message broadcasted in FM-RDS text or in FM-RDS&Audio text and audio. For professional alarming where the security is required, the Alarming message is an encoded text and is broadcasted via FM-RDS. For public alarming where the broadest reachability is required, the Alarming message is broadcast via FM-RDS& Audio.

The disclosed add-on device 11, and corresponding system 1, 61 and method thus allow to overcome killer defaults of currently existing Add-on hardware products on the market, in particular to be connected to a smartphone for entertainment e.g. music, news etc. Those killer defaults include:
- Use the ear-phone wire as the FM receive antenna
   Considering the ear-phone is not always connected to a smartphone, this means that the FM antenna is not always available therefore the Alarming message cannot always be received.
   Furthermore, the ear-phone wire can be in different shape leading to variable antenna gain. This means that the Alarming message reception quality is changeable from case to case.
- Use single miniature FM antenna
   The miniature FM antenna is narrow banded, the reception performance over the whole FM band (87.5 MHz -> 108 MHz) varies greatly (~20 dB). This means not all the FM channels can be received equally, i.e. some FM channels are not received in the areas with poor FM coverage.
- Need to tune the receive frequency manually
   Across a country or over a large area, the Alarming message is send at different FM channel i.e. at different frequency. This means it is not useable for the alarming system if the frequency needs to be tuned manually to receive the Alarming message.
- Consume too much energy
   The available Add-on devices on the market lasts a 2-3 hours before a recharging is needed, therefore it is not useable for the alarming system which needs a non-stop availability of longer than 12 hours.

Those killer defaults can be overcome by the disclosed add-on device 11, and corresponding system 1, 61 in particular by the following measures:
1)Use smartphone as the end-user device
   Today, everyone carries a smartphone and all the time. Use smartphone as the end-user device ensures the broadest reachability for any Alarming message.
2)Turn-on the smartphone when Add-on device detected an Alarming message and the smartphone is switched-off.
3)Use dedicated App running at smartphone to alert user in a chosen way and to display/broadcast the Alarming message.
   The tremendous communication & multimedia capability of smartphone enables the App to be designed for anyone in concern to receive the Alarming message in a most understandable and intuitive way including handicapped, elderlies, foreign visitors speaking different languages, etc.:
   a) FM-RDS Alarming message for professional, App enables:
      - > to alert user in Siren, or in Light, or in Vibration, or in any combination of them
      - > to display text message on the screen of smartphone
   b)FM-RDS&Audio Alarming message for public, App enables:
      -> to alert user in Siren, or in Light, or in Vibration,
         or in any combination of them, or in any special type
         of Alert for disables
      -> to broadcast the audio alarming message directly from the loudspeaker of smartphone
   c)Multi-language Alarming message reception, App enables:
      - > to decode & display the FM-RDS Alarming message correctly in the message original language
   d)Language translation, App enables:
      -> to translate the FM-RDS Alarming message in the chosen language of the smartphone
      -> to translate the FM-Audio Alarming message in the chosen language of the smartphone
   e)Text <-> Voice conversion, App enables:
      - > To read-out the FM-RDS Alarming message in the message original language and in the translated language of the smartphone
      - > To display the FM-RDS&Audio Alarming message in the original language and in the translated language of the smartphone
   d) Location capability, App enables:
      -> To allocate the smartphone when the Alarming message is received using GPS for outdoor location and an iBeacons like indoor positioning system for indoor location
   e) Alarming message backup, App enables:
      -> To save the received Alarming messages with the receiving date/time/location, the signal strength etc.
   f) Interactive communication functionality assuming the availability of backward link via Bluetooth, WiFi, mobile GSM, UMTS, LTE etc. (links are sent for inquiring further info with the FM-RDS Alarming message), App enables the further info inquiring:
      -> By clicking at the call link, a call is initiated
      -> By clicking at the SMS link, a SMS is sent
      -> By clicking at the URL, website is accessed
      -> By pressing the "Confirmation" button, the location of the smartphone is sent. One can allocate those who need help and to organize the rescue for e.g. handicapped, wondered people, elderlies, etc.
4) Master/Slave implementation, where: the Slave device has no Add-on device but has a Slave App installed; the Master device has an Add-on device & a Master App installed. The Master App has several buttons, each button is associated with a predefined group of people.
   -> After receiving the Alarming message, the user of Master smartphone can press a button to forward the Alarming message to an intended group of people or to everyone who have the Slave devices with the Slave App installed
   -> After receiving the forwarded Alarming message from a master smartphone, the user of a Slave smartphone can click at the "Confirmation" or the "Help" button, to send its location to the Master smartphone
   -> After receiving the confirmation messages from Slave smartphone, the Master smartphone can allocate the Slave smartphone and make further orders or take measures according to the need
5) Activate the App according to the security requirement:
   a) by equipping the Add-on device to the smartphone
   b) by typing the App access code (optional)
   c) by configuring the App with the specified active date, time and duration (optional)
6) Run the App with the highest priority to any on-going services & applications
   App is activated and running at the smartphone in sleep mode. At the reception of an Alarming message, the Add-on device wakes-up the App and App is running at the highest priority to any on-going services & applications.
7)Use embedded antenna
   The FM receive antenna is embedded in the Add-on device or come with the Add-on device, therefore always available
8)Use multiple antennas with an off-set of centre frequency
   The multiple antennas are designed with an centre frequency off-set. With the FM receiver designed for multi-receiving antennas, the FM reception over the whole FM band is improved
9)Use active antenna
   With a LNA, the active antenna enhances the gain of receive antenna therefore increases the reception sensitivity
10)Use dynamic impedance matching
   The impedance of miniature antenna varies largely over the FM band. The dynamic impedance matching optimizes the impedance matching constantly therefore enhances the reception sensitivity over the whole FM band
11)Use PI code based Alarming channel search
   The Add-on device tunes automatically to the FM channel for the Alarming message (identified by PI code) at start and while on-the-move
12)Use the Firmware of the Add-on device to detect the arrival of Alarm
   The Firmware detects the arrival of an Alarm message, and turns-on the smartphone and wakes-up the App at smartphone when the smartphone is off, therefore enables the reception of the Alarming message even when the phone is turned-off, or when the phone is turned on but in sleep mode or in SIM-locked mode or in screen-locked mode.

From the foregoing description, numerous modifications of the add-on device and the alarming signal receiving system and method according to the invention are apparent to one skilled in the art without leaving the scope of protection of the invention that is solely defined by the claims.

## Claims

1. An add-on device for a mobile communication device (12, 62) adapted to transmit a communication signal to another communication device (12, 62) via a distinct signal line (18, 73, 74), the add-on device (11) comprising a signal connection (15) to the mobile communication device (12, 62), **characterized in that** the add-on device (11) comprises a FM radio antenna (22) having a bandwidth including the frequency range of an alarming signal broadcast by a FM radio sender (5), and a FM radio receiver (27) adapted to receive the alarming signal from the FM radio antenna (22), wherein the FM radio receiver (27) is adapted to forward the alarming signal to a user interface (14, 64) of the mobile communication device (12, 62) through the signal connection (15).

2. The add-on device according to claim 1, **characterized in that** it comprises a battery (31) connected to the FM radio receiver (27) such that the power supply of the FM radio receiver (27) is independent from the power supply of the mobile communication device (12, 62).

3. The add-on device according to claim 1 or 2, **characterized in that** the alarming signal comprises at least one of a FM Radio Data System (RDS) signal and a FM audio signal.

4. The add-on device according to one of the claims 1 to 3, **characterized in that** the FM radio receiver (27) is configured with logic to tune to a predetermined signal channel corresponding to the frequency range of the alarming signal that is broadcast by the FM radio sender (5).

5. The add-on device according to one of the claims 1 to 4, **characterized in that** the FM radio receiver (27) is configured with logic to activate the mobile communication device (12, 62) after receiving of the alarming signal when the mobile communication device (12, 62) is not activated.

6. The add-on device according to one of the claims 1 to 5, **characterized in that** the user interface (14, 64) is adapted to read out an alarming message corresponding to the alarming signal.

7. The add-on device according to claim 6, **characterized in that** the alarming message comprises at least one of a text message (42, 43, 45) printed on a screen (41, 51, 81, 86, 91, 96) of the mobile communication device (12, 62) and a voice message (48, 49) emitted by a loudspeaker (47) of the mobile communication device (12, 62).

8. The add-on device according to one of the claims 1 to 7, **characterized in that** the user interface (14, 64) is adapted to generate an alert after detecting an arrival of an alarming signal.

9. The add-on device according to one of the claims 1 to 8, **characterized in that** the mobile communication device (12, 62) is configured with logic to transmit information related to said alarming signal to another communication device (12, 62) via said distinct signal line (18, 73, 74) after receiving of the alarming signal.

10. The add-on device according to claim 9, **characterized in that** said information comprises at least one of location information of the mobile communication device (12, 62) and information for establishing of a communication connection with another communication device (12, 62).

11. The add-on device according to one of the claims 1 to 10, **characterized in that** the FM radio receiver (27) is configured with logic to decode the alarming signal and to transfer the decoded alarming signal to the user interface (14, 64).

12. The add-on device according to one of the claims 1 to 11, **characterized in that** it comprises a housing attachable to or insertable into a housing of the mobile communication device (12, 62).

13. A system for receiving an alarming signal broadcast by a FM radio sender (5), **characterized in that** the system comprises at least one mobile communication device (12, 62) adapted to transmit a communication signal to another communication device (12, 62) via a distinct signal line (18, 73, 74), wherein the mobile communication device (12, 62) is equipped with a FM radio antenna (22) having a bandwidth including the frequency range of an alarming signal broadcast by a FM radio sender (5), and with a FM radio receiver (27) adapted to receive the alarming signal from the FM radio antenna (22), wherein the FM radio receiver (27) is adapted to forward the alarming signal to a user interface (14, 64) of the mobile communication device (12, 62) through the signal connection (15).

14. The system according to claim 13, **characterized in that** the mobile communication device (12, 62) is configured to forward an alarming message based on the received alarming signal to another mobile communication device (12, 62) via the distinct signal line (18, 73, 74).

15. A method for receiving an alarming signal, wherein the alarming signal is broadcast by a FM radio sender (5),
**characterized in that** the method comprises the steps of
- receiving the alarming signal by a FM radio receiver (27) that is connected to the hardware of a mobile communication device (12, 62) adapted to transmit a communication signal to another communication device (12, 62) via a distinct signal line (18, 73, 74); and
- forwarding the alarming signal to a user interface (14, 64) of the mobile communication device (12, 62).
